Europäisches Patentamt

European Patent Office

Office européen des brevets

(11) Publication number: **0 347 962**

**A2**

## EUROPEAN PATENT APPLICATION

(21) Application number: 89201372.3

(51) Int. Cl.⁴: **F16L  9/08**

(22) Date of filing: 30.05.89

(30) Priority: 20.06.88 IT 2104288

(43) Date of publication of application:
**27.12.89 Bulletin  89/52**

(84) Designated Contracting States:
**AT BE CH DE ES FR GB GR LI LU NL SE**

(71) Applicant: **NUOVA SACELIT S.p.A.**
**Via G. Camozzi 124**
**I-24100 Bergamo(IT)**

(72) Inventor: **Marino, Rodolfo**
**Via G.B. Morgagni 39**
**I-20129 Milan(IT)**
Inventor: **Pacchioni, Franco**
**Via G. B. Morgagni 39**
**I-20129 Milan(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Tube having a structure made from cement, method and machine for manufacturing it.**

(57) The present invention relates to a tube made from cement and having a layer structure, the use of which is destined in particular to the hydraulic/building field. Said tube shows the characteristic that the usual asbestos fibres used in order to reinforce such kind of articles have been replaced by other fibres having similar functional features, for example of cellulose, at the inner surface of said tube, which is destined to come into contact with the liquid conveyed inside the same tube. In correspondence of said inner surface, the usual Portland cement can be replaced by cement endowed with resistance to aggressive waters. The process for manufacturing such a tube consists in depositing at least two layers of reinforced cement mortar on a core, the outer diameter of which coincides with the inner diameter of the tube, and in such a way that such layers set simultaneously to the other layers, forming one enbloc cement structure, even if reinforced with different reinforcing materials.

The machine for producing such a tube is equipped with a plurality of tanks from which by means of conveyor belt and of roll means the cement mixture in the fluid state is alternatively drawn, which has to be deposited together with the fibres contained in it as layers on a core used in order to form the tube.

Fig.3

## TUBE HAVING A STRUCTURE MADE FROM CEMENT, METHOD AND MACHINE FOR MANUFACTURING IT

The present invention relates a tube according to the preamble of the first claim.

Tubes are presently known, which are made from asbestos cement, and are extensively used in the hydraulic/building field thanks to their proven characteristics of high mechanical strength, long useful life and low cost.

Unfortunately, owing to the supposed dangerousness of asbestos, their use has been drastically reduced.

In fact, those skilled in the art suppose that asbestos, by coming into contact with the liquid flowing inside the tube, when said liquid is aggressive, may leave the cement matrix releasing fibres polluting the same liquid conveyed by the tube, with all of the relevant consequences. Furthermore, in case particularly aggressive waters are conveyed inside the tube, even the traditional cement can be attacked and corroded.

The tubes made from different materials which are presently used in order to replace the asbestos cement tubes, although are capable of obviating the problem of the pollution of the conveyed liquids and the problem of the chemical attack of cement, do not behave in an equally satisfactory way when the whole of the requisites of mechanical strength, long useful life and low cost, which are customarily demanded by the market for such tube types, are taken into consideration.

In view of such prerogatives, one could not think, for example, of solving the technical problem by manufacturing a tube of composite structure by simply associating two or more concentric tubular elements having different and suitable chemical-functional characteristics separately made and then united to each other by means of a forced mechanical coupling or of a mutual keying or bonding by means of adhesives, or other similar procedures.

Furthermore, in the present state of the art such a solution cannot be successfully practiced owing to the higher production costs which would be involved by a tube having such a structure, whose manufacturing cycle (contrarily to the process of production of the present asbestos cement tubes), cannot be completely automated, unless the presently existing facilities for the production of such tube types are radically rearranged.

Such a solution is furthermore difficult to be successfully carried out in practice, owing to the difficulties met in finding out surely compatible materials.

Therefore the simple association of materials which, even if are provided with the necessary characteristics of mechanical strength and chemical resistance, do not show, e.g., same coefficients of heat expansion, or same ageing times, cannot satisfactorily solve the problem.

The purpose of the present invention consists in providing a tube of asbestos cement, which is capable of obviating the above drawback, i.e., which is capable of preventing fibres from being released to the conveyed liquid and/or to the surrounding environment, as well as the inner surface from being corroded. Such a tube, like the tubes manufactured from a material different from asbestos cement, maintains unchanged for a long time the same valuable characteristics of high mechanical strength and long useful life, and, like the traditional tubes of asbestos cement, maintains unchanged the low manufacturing cost, thanks to the fact that the possibility is assured, it to be manufactured on already existing facilities, after these latter being suitably modified.

Such purposes are achieved by a tube in particular for applications in the hydraulic field or in the buiding field, which comprises a monolithic and waterproof cement structure reinforced with asbestos fibres, bounded by an outer surface and an inner surface, characterized in that at least in correspondence of said inner surface the cement structure is obtained from cement resistant to aggressive waters and is free from asbestos fibres, which are replaced by a fibrous material endowed with functional characteristics comparable to those of asbestos.

The invention is illustrated for merely illustrative and non-limitative purposes in the figures of the hereto attached drawing tables, in which:

Figure 1 shows a cross-sectional view of the tube according to the present invention;

Figure 2 shows a cross-sectional view of an alternative form of practical embodiment of the tube according to the present invention;

Figure 3 shows a schematic view of a first form of practical embodiment of the machine for producing the tubes according to the present invention;

Figure 4 shows a schematic view of a second form of practical embodiment of the machine for producing the tubes according to the present invention;

Figure 5 shows a schematic view of a third form of practical embodiment of the machine for producing the tubes according to the present invention.

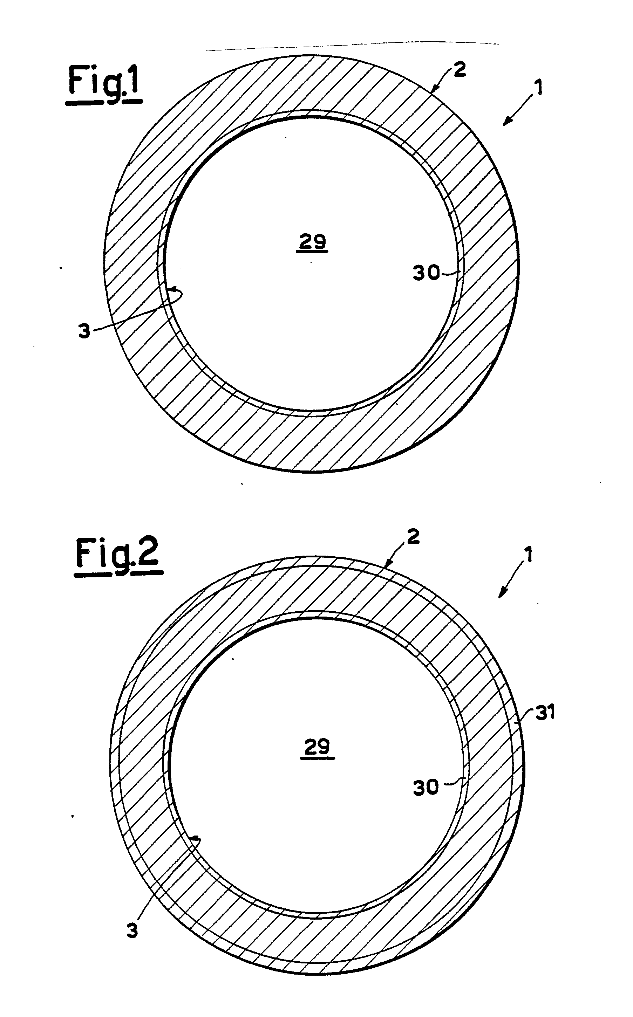

Referring to the above cited figures, and in particular to Figure 1, the tube according to the present invention, generally indicated by the reference numeral 1, comprises a monolithic waterproof cement structure bounded by an outer surface 2 and an inner surface 3, concentric to each other and defining the outer overall dimensions of the tube 1 and the inner croos-section surface-area, or free-passage opening 29, of the same tube.

The cement structure is reinforced with asbestos fibres, except for a thin annular region 30 adjacent to the inner bounding surface 3, in which asbestos fibres are not present, because they are replaced by a material, for example of vegetable origin, also in the form of fibres having functional characteristics comparable to those of asbestos.

Such a material is, e.g., highly refined cellulose.

Cellulose, although meets the toxicologic requisites, the requisites of mechanical strength and, above all, the requirements of low cost, could be fully or partially replaced by other fibres such as polyethylene, polypropylene, PVA, possibly also combined with one another, contained at various percentages according to the articles produced, and with a length and a diameter which, for indicative purposes, are of approximately 1-6 mm and 10-30 microns.

The cement used in the pure state in order to produce the structure of the tube can be of Portland type, pozzuolana cement, slag cement iron-pozzuolana cement, iron-ore cement, or of still other types, with the cement of Portland type being the preferred one.

In case a particular resistance of the tube to aggressive waters is required, the cement structure adjacent to the inner surface and/or to the outer surface is accomplished by using such cements as pozzuolana cement, slag cement, iron-pozzuolana cement, or iron-ore cement.

The precentage of cement in the cement structure not adjacent to the inner surface 3 is, for indicative purposes, comprised within the range of from 88 to 82% vs. a percentage of from 12 to 18% of asbestos fibres, whilst in the layer adjacent to the inner surface of the tube, the percentage of cement is comprised within the range of from 94 to 90%, vs. (e.g.) a percentage of cellulose fibres comprised within the range of from 6 to 10%. For example, in a tube of 300 mm of diameter, with a thickness of 17 mm, the region adjacent to the inner surface 3, reinforced with fibres different from asbestos fibres, e.g., cellulose fibres, has a thickness variable within the range of from 1.5 to 2 mm, whilst the residual portion of cement structure has a thickness comprised within the range of from 15.5. to 15 mm.

The process for manufacturing such a tube as hereinabove illustrated is as follows.

A temporary support, or core, is used, the length, dimensions and external shape of the cross section of which are respectively equal to the lemgth, the dimensions and the inner shape of the tube to be manufactured.

In particular, in case a tube of circular cross-section has to be obtained, the diameter of the outer periphery of the cross section of the core corresponds to the diameter of the inner free cross-surface, or free passage opening 29, of the tube 1.

A first mixture of cement (e.g., of the type resistant to aggressive waters), water and cellulose fibres is prepared.

At least one layer of said first cement mixture is applied onto the outer surface of the temporary support, or core, 25. A second mixture of cement (e.g., of Portland type), water and asbestos fibres is prepared.

At least one layer of said second mixture is applied above said first mixture while this latter is still in its setting step, so that both said mixtures form one single, monolithic structure free from discontinuities, even if the composition of its layers is different, owing to the presence of at least two different materials in fibre form, and of two different types of cement.

At the end of the setting step (which can be favoured or less by introducing the tube inside rooms under controlled conditions of temperature and moisture, such as, e.g., dryers, ovens or the like), the core is slid off from the tube, which is sent to the finishing and storage steps.

Referring in particular to Figure 2, in case the second layer has to be isolated (so that the asbestos contained in it cannot come into contact with the external environmeent and with those who handle the tube), a further layer of first mixture can be deposited above the pre-existing layers before they set, so that the continuity of the matrix of cement of the tube is not impaired, with the formation being achieved of an annular region 31 adjacent to the outer surface 2 reinforced with a different material, and possibly also with a cement type different to this latter.

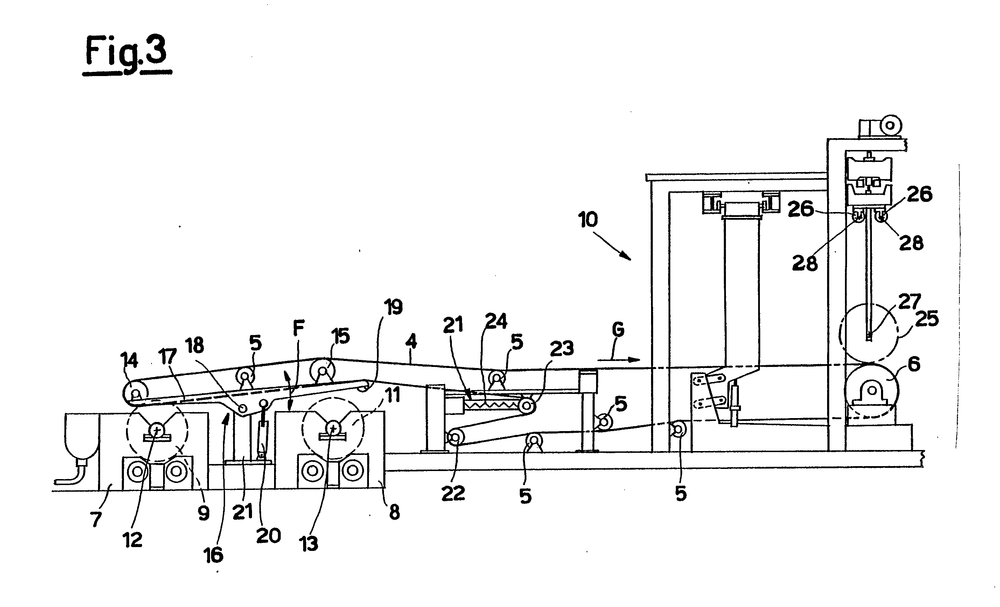

In case one wishes to mechanize the process for the production of the tube according to the present invention, a type of machine, generally indicated by the reference numeral 10 in Figures 3-5 is used, which has such a structure as to comprise conveyor belt means, constituted by a felt belt 4, running along a closed-loop path, supported by rolls 5 and driven by a driving roll 6 installed at an end of said closed-loop path.

The machine 10 comprises at least a first tank 7 and a second tank 8, inside which tanks there is a cement mixture in the fluid state, composed by cement and water, to which different fibrous materials are respectively added according to the tanks (for example, cellulose, and asbestos, also in fibre form).

Inside the first tank 7 and the second tank 8 and partially dipped inside the cement mixture, there are a first dipping roll 9 and a second dipping roll 11 of perforated structure, for example made from net, revolving around their own axes, respectively 12 and 13.

The dipping rolls 9 and 11 are antagonist rolls respectively relatively to a first coucher roll 14 and a second coucher roll 15, and between them the felt belt 4 runs. The coucher rolls 14 and 15 are supported by su pport means 16, which are capable of changing their mutual position relatively to the dipping rolls 9 and 11.

Such means 16 have been made according to different modalities, according to whether the simultaneous engagement of both of the coucher rolls 14 and 15 with the dipping rolls 9 and 11 has to be also mechanically prevented, or less.

Referring in particular to figure 3, the means 16 for changing the mutual position of the coucher rolls -dipping rolls within the relevant roll pairs, comprise a rocker device comprising a pair of parallel, rocking arms 17 (only one of which is visible in figure 2), arranged around a hinge pivot 18 positioned in correspondence of their middle point and respectively supporting at their first ends and at their second ends the first coucher roll 14 and the second coucher roll 15.

In correspondence of the second ends of the rocker arms 17 means for supporting the felt belt 4 are provided in the nearby of the coucher rolls 14, 15, which are formed by a metal plate or an idling roll 19, on which the felt belt 4 is supported.

In the case shown in the Figure, the felt belt 4 supporting means are not provided in the region of the first coucher roll 14, because in correspondence of such a roll the felt belt 4 reverses its direction of movement. When the second coucher roll 15 is disengaged from the contact with the second dipping roll 11, the roll 19 performs the task of supporting the felt belt 4.

The rocker device oscillates around the hinge pivot 18 thanks to hydraulic cylinders 20 parallel to uprights 21 which support the felt belt 4.

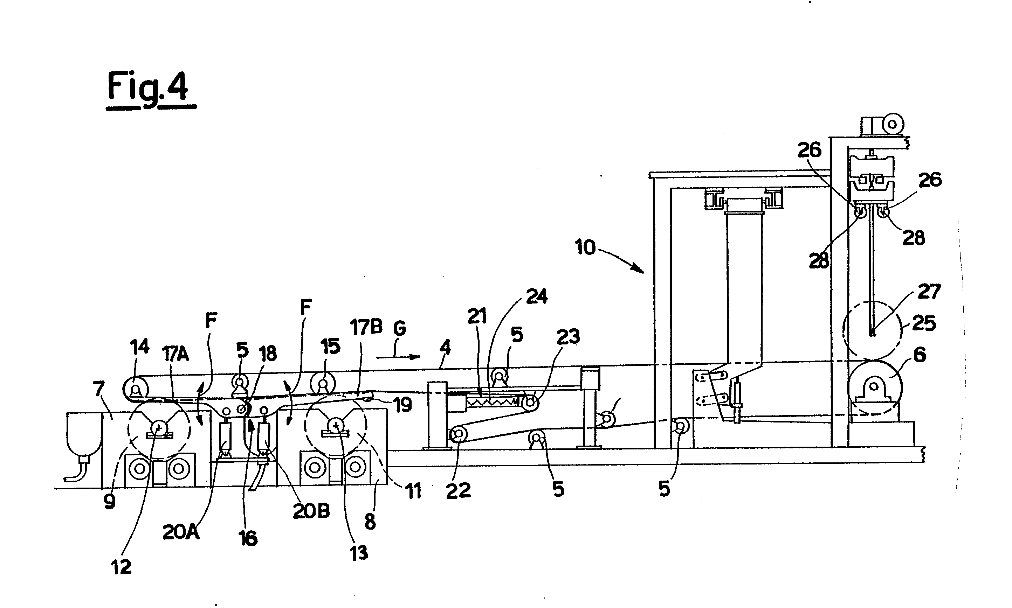

A second form of practical embodiment of the means 16 for varying the mutual position of the coucher rolls - dipping rolls within the relevant roll pairs, shown in Figure 4, makes it possible the coucher rolls 14 and 15 to come into engagement with the respective dipping rolls 9 and 11 either alternatively or simultaneously, thanks to the fact that each one of said rocker arms 17 is subdivided into two half-arms 17A and 17B oscillating around the common hinge pivot 18 and are actuated by hydraulic cylinders 20A and 20B.

The user evaluates, on the basis of his experience, whether such a possibility should be taken advantage of, or not.

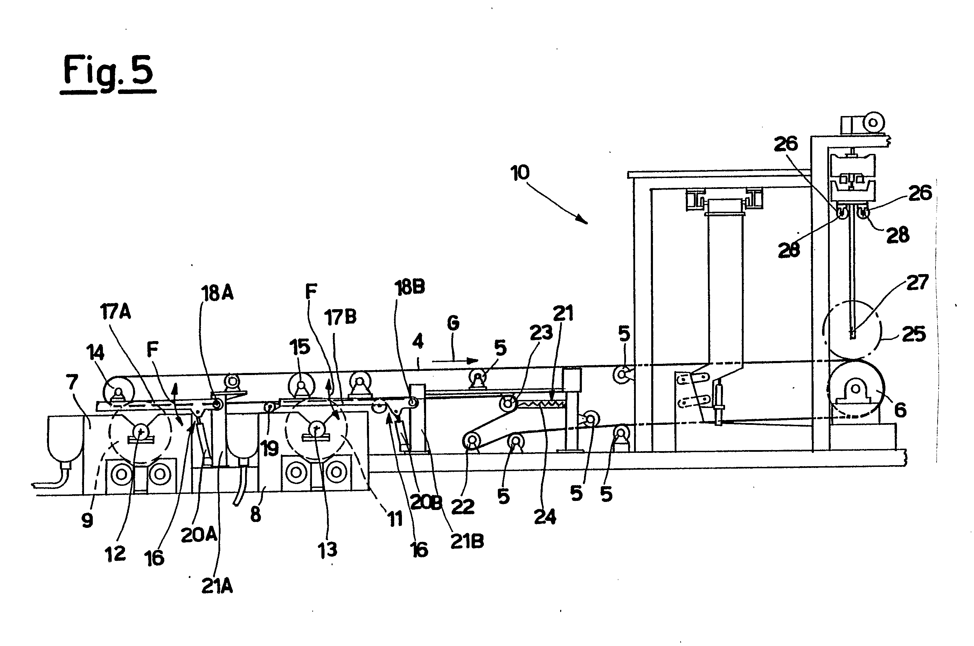

In a third form of practical embodiment of the means 16 shown in Figure 5, the two arms 17A and ·17B are no longer hinged on one common hinge pivot, but are hinged by means of two distinct hinge rolls 18A and 18B supported by distinct uprights 21A and 21B, with the hydraulic cylinders 20A and 20B being installed parallel to these latter.

In all of the above disclosed three forms of practical embodiment the motion (arrows F) of the arms 17 or of the half-arms 17A and 17B around the hinge pivot 18, or around the hinge pivots 18A and 18B, in order to disengage each coucher roll 14 and 15 from the corresponding dipping roll 9 anf 11, simultaneously causes the tension of the felt belt 4 to decrease, with consequently said belt getting slackened.

The recovery of tension is constant and immediate thanks to means of compensation of the length of the belt 4, generally indicated by the reference numeral 21.

Such means 21 comprise a first fixed roll 22 and a first mobile roll 23 sliding perpendicularly to its own axis. Along its path, the belt 4 by running returns around both of said rolls, running along an "S"-shaped path. The mobile roll 23 is kept pressed against the belt 4 thanks to the load applied to it, in the herein illustrated cases, by elastic means 24, namely an either compressed or stretched spring. The tension recovery means 21 can also be accomplished by means of hydraulic or pneumatic devices.

In correspondence of the driving roll 6, adhering to the felt belt 4, the temporary support or core 25 is provided, which revolves around its axis 27 and cooperates with pressing rolls 26 also revolving around their axis 28 and translating perpendicularly to it during their motion of approaching to the core 25.

The process for forming the tube by using the machine 10 is disclosed in the following particular, but not exclusive, reference to Figure 2, wherein the machine 10 is shown with the first dipping roll 12 and the first coucher roll 14 being engaged into contact with the felt belt 4, and with· the second dippin g roll 11 and the second coucher roll 15 being disengaged.

The felt belt 4 runs in the direction of the arrow "G". The first dipping roll 9 revolves around its own axis 12, draws an elementary layer of cement mixture, containing cellulose fibres, and deposits said elementary layer of cement mixture on the felt belt 4 throughout its whole width.

The elementary layer of cement mortar decreases in fluidity thanks to the partial absorption of water through the porous structure of the felt belt, owing to the presence of sucking boxes during its motion of approaching towards the core 25. The elementary layer of cement mixture, which has a thickness of about 0.2 mm, comes in the nearby of the core 25 in its best conditions in order to adhere to it, so the subsequent step of adhesion and wrapping takes place spontaneously by simple contact, and is anyway favoured by the action of the pressing rolls 26.

The wrapping of the elementary layer of cement mixture takes place by successive spirals, until the desired thickness for the first layer of cement mixture of the tube is reached.

Successively, and as an alternative, to the first pair of rolls 14 and 9, the second rolls 15 and 11 are engaged with each other thus depositing, with the same modalities as of the first ones, an elementary layer of cement mixture coming from the second tank 8, and therefore containing the asbestos fibres, which goes to form a second layer of cement mixture of the tube, superimposed to the first layer, so as to obtain a tube consisting of one single cement mattrix free from discontinuities, even if it is reinforced with fibres of materials of different nature.

When the wrapping steps are over, the wrapped core 25 is replaced by another one in order to obtain a new tube. From the above, the extremely high versatility is evident of the machine 10, which makes it possible a tube to be obtained, which may also be constituted by more than two superimposed layers of different materials, by simply varying the number of the tanks, so as to have available a plurality of cement mixtures, or the number of steps of mixture drawing from said tanks, or both of them. Furthermore, by simply changing the diameter of the core 25, tubes having a consequently changed diameter can be obtained.

The advantages offered by the tube according to the present invention are the following:
- functional characteristics typical of the tubes of asbestos cement,
- high chemical characteristics of the inner/outer layers, thanks to the use of cement having a high resistance to aggressive chemicals,
- high resistance to wear and ageing thanks to the monolithic structure of the manufactured tubes, which do not undergo any differential heat expansions.

As regards the manufacturing process, it shows the following advantages:
- it can be automated without resort having to be had to completely different machinery, but by modifying the already existing equipment,
- it is versatile, in that by means of the simple repetition of operating steps, one can produce tubes having different cross sections from the view points of their dimensions, of their shape and of their structure.

The present invention, as a whole, solves the technical problem in a particularly cheap way owing to the following reasons:
- it makes it possible the use to be continued of materials which are already customarily used in the concerned field, such as, e.g., cellulose fibres, which, besides having a low cost, display a known behaviour over time; therefore, it is not necessary to perform experimental tests on the product which uses it, before throwing it on the market, with consequent savings in costs and risks.

## Claims

1. Tube (1) in particular for applications in the hydraulic field or in the building field, which comprises a monolithic and waterproof cement structure reinforced with asbestos fibres, bounded by an outer surface (2) and an inner surface (3), characterized in that at least in correspondence of said inner surface (3) the cement structure is made from cement resistant to aggressive waters and is free from asbestos fibres, which are replaced by a fibrous material endowed with functional characteristics comparable to those of asbestos.

2. Tube (1) according to claim 1, characterized in that in correspondence of both of the inner surface (3) and of the outer surface (2) the cement structure is free from asbestos fibres, with a fibrous material being provided as a substitute for said fibres, the functional characteristics of which are comparable to those of asbestos fibres.

3. Tube (1) according to claims 1 and 2, characterized in that the fibrous material having functional characteristics comparable to those of asbestos is cellulose.

4. Tube (1) according to claim 3, characterized in that the material used in order to replace asbestos is of vegetable origin and is cellulose in fibre form.

5. Process for manufacturing the tube (1) according to one or more of claims from 1 to 4, characterized in that it consists of:
- preparation of a first mixture of cement, water and a fibrous material different from asbestos, but having the same functional characteristics,
- application of at least one layer of said first mixture to a temporary support or core (25), the length, dimensions and external shape of the cross section of which coincide with the length, dimensions and inner shape of the tube (1) to be manufactured,
- preparation of a second mixture of cement, water and asbestos fibres,
- application of at least one layer of said second mixture above said first mixture while this latter is still in its setting step, so that both mixtures constitute one single structure free from discontinuities,
- setting of said layers,
- removal of the temporary support or core (25), with the end tube (1) being obtained.

6. Process according to claim 5, characterized in that after the application of said second mixture at least one further layer of said first mixture is applied, so that the layers constituted by the second mixture are contained between two peripheral layers constituted by the first mixture.

7. Machine (10) for manufacturing the tube (1) according to claims from 1 to 4 according to the operating method according to claims 4 and 5, comprising at least one first tank (7) inside which a first dipping roll (9) is dipped inside the first mixture and is antagonist to a first coucher roll (14), and at least one second tank (8) structurally identical to the first tank (7), housing a second dipping roll (11) antagonist to a second coucher roll (15), conveyor belt means (4) interposed with contact between each pair of antagonist dipping roll - coucher roll, and running along a closed-loop path and tangent to the temporary support or core (25) of the tube (1) to be manufactured cooperating with pressing rolls (26), characterized in that it comprises means (16) for changing the mutual position of said coucher rolls (14, 15) relatively to said dipping rolls (9, 11) acting on each pair of antagonist dipping roll -coucher roll and in cooperation with means (21) for the compensation for the length of the belt means (4).

8. Machine (10) according to claim 7, characterized in that the means (16) for changing the mutual position of the coucher rolls - dipping rolls comprise a rocking device formed by a pair of parallel arms (17, 17A, 17B) swinging around a hinge pivot (18, 18A, 18B) installed in correspondence of their middle point and respectively supporting at their first ends and at their second ends the first coucher roll (14) and the second coucher roll (15), with support means (19) for supporting the above said belt means (4) being provided in the nearby of at least one (15) of said coucher rolls.

9. Machine (10) according to claim 8, characterized in that each parallel and rocking arm is subdivided into two half-arms, i.e. a first half-arm (17A) and a second half-arm (17B), each controlled by a hydraulic cylinder of its own (20A, 20B) and rotating (F) relatively to one single, common hinge pivot (18), with the free ends of said first half-arm and of said second half-arm respectively supporting the first coucher roll (14) and the second coucher roll (15).

10. Machine (10) according to claim 9, characterized in that said first half-arms (17A) and said second half- arms (17B) respectively rotate in correspondence of a first hinge pivot (18A) and of a second hinge pivot (18B) thanks to hydraulic cylinders (20A, 20B) of their own.

11. Machine (10) according to claim 8, characterized in that the support means for supporting the belt means (4) are formed by rolls (19) which keep the belt means (4) close to the coucher rolls (14, 15) both during the step of engagement of this latter with the dipping rolls (9, 11), and during their disengagement step.

Fig.1

Fig.2

Fig.3

**Fig.4**

Fig.5